Europäisches Patentamt

European Patent Office

Office européen des brevets

(19)

(11) Publication number: **0 271 902**
A2

(12) # EUROPEAN PATENT APPLICATION

(21) Application number: 87118694.6

(22) Date of filing: 16.12.87

(51) Int. Cl.⁴ **B25B 23/147** , B25B 23/151

(30) Priority: 17.12.86 GB 8630107

(43) Date of publication of application:
22.06.88 Bulletin 88/25

(84) Designated Contracting States:
AT BE CH DE ES FR GR IT LI LU NL SE

(71) Applicant: SPS TECHNOLOGIES, INC.
Newtown-Yardley Road
Newtown Pennsylvania 18940(US)

(72) Inventor: Tambini, Angelo L.
Athdown Manor Kilbridge
Country Wicklow(IE)
Inventor: Butler, John F.
Blessingron Road
Naas(IE)

(74) Representative: Patentanwälte Grünecker,
Kinkeidey, Stockmair & Partner
Maximilianstrasse 58
D-8000 München 22(DE)

(54) Method of and apparatus for tightening screw-threaded fasteners.

(57) The invention relates to a method of and apparatus for tightening screw-threaded fasteners for producing workpiece joints by using a power-driven rotary tightening tool containing rotatable parts. According to the invention during turning the fastener the snug point is detected. At the snug point power to the drive motor is inhibited so that the fastener is tightened further by the inertial energy of the rotating parts of the tightening tool. The apparatus disclosed comprises control circuits for a driving motor for rotatable parts of the tightening tool and further comprises means for detecting the snug point and means for inhibiting power input to the rotatable parts of the tool when the snug point has been detected.

EP 0 271 902 A2

FIG. I

# METHOD OF AND APPARATUS FOR TIGHTENING SCREW-THREADED FASTENERS

The invention relates to a method of and apparatus for tightening screw-threaded fasteners.

Screw-threaded fasteners are conventionally tightened, where they are employed in production on an assembly line, by using a power-driven rotary tightening tool by which the amount of tightening of a fastener is controlled by detecting a function of tightening, such as the torque exerted in the fastener, the angle of turning of the fastener, the tension exerted in the fastener and the yield in the fastener, monitoring said function of tightening by a transducer and stopping the motor producing the tightening torque when the transducer has detected that the tightening has reached the required amount. Alternatively, the amount of tightening may be controlled by allowing the motor to stall when a predetermined torque has been reached. All these known methods involve the physical stopping of the driving motor when the fastener has been tightened by the required amount.

When a screw-threaded fastener is being tightened, the tightening tool has to be turned through an initial angle, which may be greater than one complete turn, before effecting engagement of the joint to the point where further turning of the fastener will commence to tighten the fastener itself. The point at which tightening of the fastener itself commences is usually termed the "snug point" and the corresponding torque the "snug torque".

According to the invention, the method of tightening a screw-threaded fastener by using a power-driven rotary tightening tool consists in the detection of the commencement of application of tightening torque to the fastener itself, i.e., the snug point, as hereinbefore defined, and employing the detection of the snug point to inhibit further application of input power to the tool, whereby the fastener will be tightened by the inertial energy of the rotating parts of the tool. This method is hereinafter called "energy tightening".

Energy tightening as provided by this invention, therefore differs from known methods in that the required tightening occurs after power input to the driving motor has ceased instead of stopping the power input to the motor when the required amount of tightening has occurred. Energy tightening has advantages which will be explained hereinafter.

The invention also includes apparatus for tightening a screw-threaded fastener by energy tightening comprising means for detecting the snug point and means for inhibiting power input to a power-driven rotary tightening tool when the snug point has been detected.

The inertial energy of the rotating parts of the tool is a function of the square of the speed of rotation when the power input is inhibited and therefore it is desirable that a driving motor employed in the tool shall be a variable speed motor.

Preferably the driving motor is an induction motor controlled by an inverter circuit, as this enables the speed of the motor to be independent of the frequency of the power supply.

Any means of detecting the snug point may be employed. Where the driving motor is an induction motor controlled by an inverter circuit, the snug point may conveniently be detected by using a proximity detector responsive to the passage of a rotating metallic part of the motor, e.g., a blade of a cooling fan driven by the motor, and a control circuit to determine a reduction in speed of the motor indicative of the fastener reaching the snug point, and then to disable the motor.

The apparatus may include a hand-held right-angle nut runner driven by an induction motor controlled by an inverter circuit, circuit means for detecting when the snug point has been reached and for switching off the electrical supply to the motor when the snug point has been detected, the circuit means including a proximity detector positioned adjacent the cooling fan blades of the motor to detect the reduction in speed of the motor indicative of the fastener reaching the snug point.

The nut runner may also include a manually-operable switch controlling a circuit for operating the motor in reverse to provide an untightening mode.

Additionally the nut runner may include a motor-control circuit or circuits operable in response to torque or angle of turn input to the fastener and a selector switch, whereby the mode of operation of the nut runner may be selected form energy tightening, torque control or angle of turning control and untightening.

By way of example and explanation, the energy tightening method and apparatus for performing the method are now described with reference to the accompanying drawings, in which:-

Figure 1 is a graph of Torque plotted against Tightening Angle for a screw-threaded fastener;

Figure 2 is a graph of Torque plotted against Speed of Rotation for an induction motor, and

Figure 3 is a block diagram of a circuit for detecting when snug point of a joint including the fastener has been reached and for switching off the induction motor.

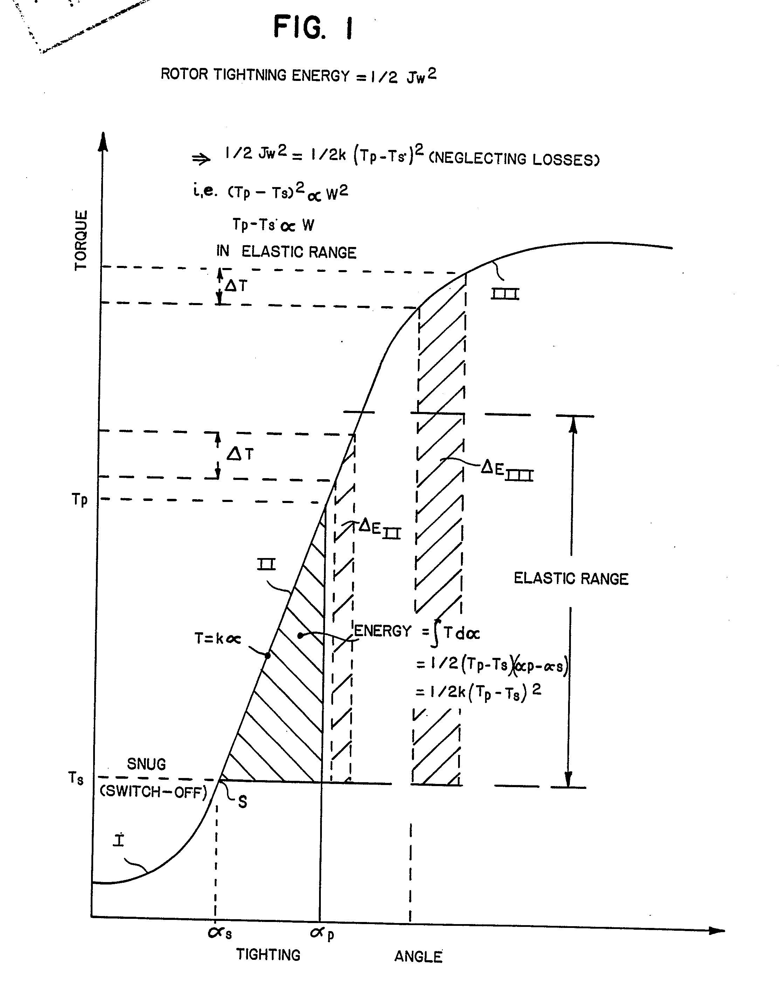

Figure 1 shows pictorially a typical relationship between torque and angle of tightening for a screw-threaded fastener and this comprises three regions:-

I. an initial region during which slackness of the joint is being taken up;

II. a normal region where the fastener is behaving elastically and so the relation between torque and angle of tightening is linear, and

III. a region into which the fastener is not normally tightened, under torque-controlled tightening, where the fastener enters into a plastic region beyond the elastic limit of material of the fastener.

The commencement of the linear region II is the point where the joint has bedded down and the fastener itself becomes subjected to torque. This region is defined as the "snug point" and is indicated in Figure 1 by 'S'.

Under torque-controlled tightening, torque is normally applied to the fastener to a point in the linear region II and then tightening is stopped. When the torque is applied by a hand-held tool, the point where the application of torque is stopped is usually considerably below the upper end of the linear region II to make sure that the plastic region III is not entered, because the continual application of torque after the plastic region III has been reached would quickly cause failure of the fastener. In practice in the absence of a torque-responsive transducer, tightening either by hand or by a driving motor may be stopped at approximately midway in the region II to ensure that the fastener does not enter into the plastic region III.

By the energy-tightening method according to this invention, the fastener is tightened by a tool having a driving motor and use is made of the inertial energy of the rotating parts of the tool after power drive by the motor has been discontinued and thereby to continue to effect tightening of the fastener. Desirably the power imparted to the tool by the driving motor is discontinued at the snug point so that the inertial energy of the rotating parts of the tool will continue to turn the fastener within the linear region II.

However even where the rotation of the fastener by the inertial energy continues into the plastic region III, this will not be of importance as the rotating parts of the tool are running freely and the torque/angle of tightening characteristic will be followed, the inertial energy remaining when the plastic region III is reached being more rapidly absorbed than in the elastic region II. This is demonstrated in Figure 1 where an increase of torque $\Delta_T$ in the linear region II corresponds to smaller decrease in energy $\Delta_{E_{II}}$

than the decrease in energy $\Delta_{E_{III}}$

corresponding to the same increase in torque $\Delta_T$ in the plastic region III, the energy absorbed being the area subtended under the curve to the snug torque $T_s$.

The energy available for tightening produced by the rundown of the rotating parts of the tool after the motor drive has been discontinued at the snug point is derived from the equation:

$$E = \tfrac{1}{2} J w^2$$

where J is the moment of inertia of the rotating parts which can be regarded as a cylindrical rotor having an angular velocity at snug point = w.

In the elastic or linear region II, as $T = K \propto$, where T is the torque and $\propto$ is the angle of tightening, the energy in the region II is given by th equation:

$$E = \int_{\propto_s}^{\propto_p} T \, d\propto$$
$$= \frac{1}{2K} (T_p - T_s)^2$$

Therefore as $E = \tfrac{1}{2} J w^2 = \frac{1}{2K} (T_p - T_s)^2$, neglecting losses,

$(T_p - T_s)^2$ is proportional to $w^2$

or $T_p - T_s \propto w$,

where $T_p$ is the torque at the point within the elastic region II where the rotation ceases, i.e., the fastener is tightened to the required torque and $T_s$ is the snug torque.

If the torque angle relationship of the bolt is known, it is possible to calculate the speed required to obtain a particular torque, from the energy relationship given hereinbefore. The moment of inertia of the cylindrical rotor is calculated from its mass and radius as follows:

$$J = \tfrac{1}{2} Mr^2$$

In practice the relationship between motor speed and fastener final torque is determined by trial on a test piece in which the torque is measured by a transducer.

Preferably, the motor used to drive the tool and the fastener is an induction motor although other electric motors such as an electrically commutated of brushless D.C. motor or a pneumatic motor can be used.

Advantages of using an induction motor are that such motors are comparatively cheap, rugged, easy to maintain and can be driven at sufficiently low voltages (e.g., 48 $V_{RMS}$) to make them suitable for use in hand-held tools, such as a right-angle nut runner. The induction motor is driven by its electrical supply input at the speed required until the supply is discontinued at the snug point and then it will slow down and eventually stop as the inertial energy is absorbed by the fastener. The rotational speed at the snug point is controlled by a suitable inverter circuit which can give a variable output according to the angular velocity which is required in order to produce the correct inertial energy available for absorption by the fastener in order to effect the required tightening torque during run-down.

In accordance with a feature of this invention, the driving motor by which the fastener is tightened is an induction motor for which the power input is interrupted when the snug point is reached.

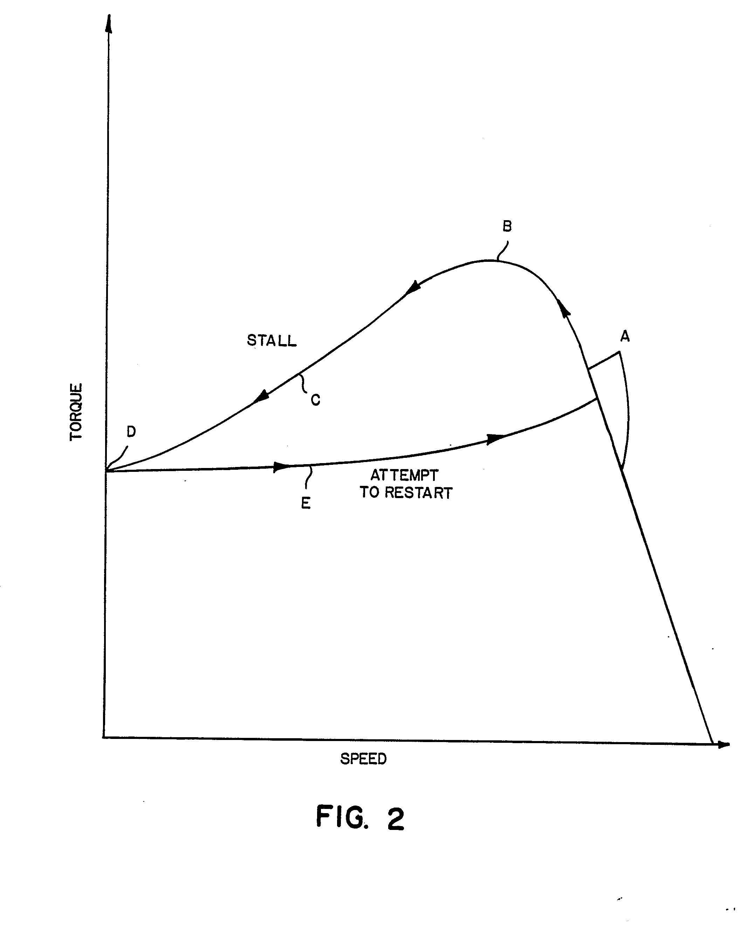

As will be described herein the attainment of the snug point is detected by reduction of rotational speed which occurs when the snug torque has been reached. A typical Torque/Speed curve for an induction motor is shown in Figure 2. Applying this typical curve to the tightening of a fastener, the motor will be operating in the part of the curve shown at A prior to the snug point being reached. If the motor is not inhibited at the snug point its torque will continue to rise to its maximum value as shown as B, and then it will fall along a region C towards a stall point D. If the motor is provided with a control circuit which will interrupt the supply to the motor at the snug point but does not ensure that it is not restored till completion of the tightening, the motor will travel down the region C until the stall point D is reached. When the stall point D has been reached with the supply still on, the motor will attempt to restart due to the reduced load and the torque will start to rise again as indicated by part E of the Torque/Speed curve. Thus the drive to the fastener could recommence. To avoid this the control circuit must inhibit the supply to the motor when the snug point has been reached and before the stall point is reached and latch this inhibit until tightening is complete.

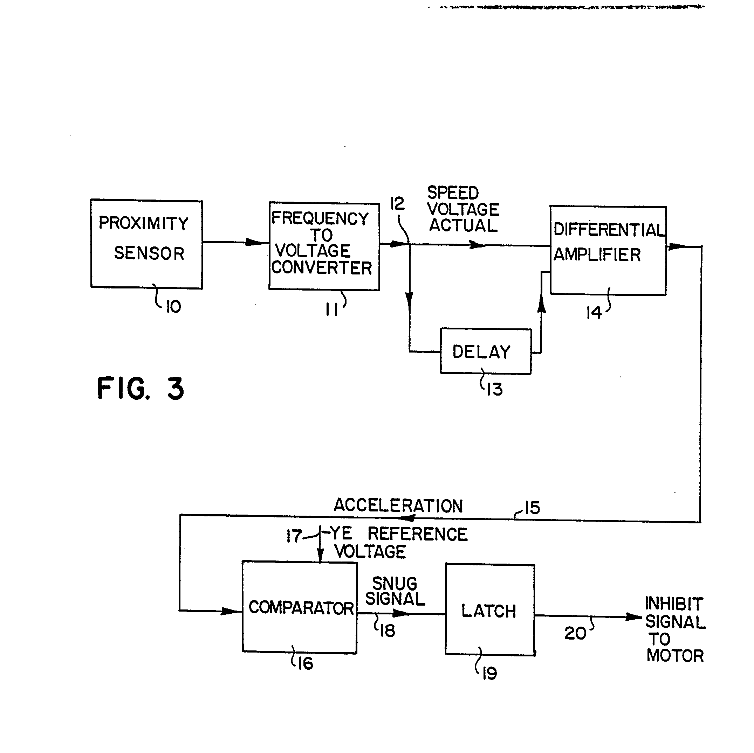

A typical control circuit for an induction member incorporated in the tightening tool is shown in Figure 3. The circuit includes a proximity sensor 10 responsive to the passage past it of metal. The proximity sensor 10 is positioned adjacent the cooling fan of the motor so that each time a blade of the fan passes the proximity sensor 10, the latter will produce a pulse. For example, where the fan has fifteen blades and the motor output shaft driving the fan includes a 100:1 gear ratio, 1500 pulses are emitted per revolution of the motor output shaft. These pulses are applied to a Frequency to Voltage converter 11 which produces an actual voltage signal dependent on speed at 12. A branch from the output from the converter 11 is fed via a delay circuit 13. The actual voltage signal and the delay signal are applied as inputs to a Differential Amplifier 14. This gives an output signal at 15 which is indicative of acceleration of the motor output shaft.

A negative value at 15 represents deceleration. This is applied as an input to a comparator circuit 16 which also has a negative reference voltage input 17. Thus an output signal from the comparator at 18 indicates when the snug point has been reached. This is used as an inhibit signal to stop the motor 20. In order to prevent the undesirable automatic re-start of th motor as described in the immediately preceding paragraph, the snug signal at 18 is applied to the motor via a latch circuit 19. The circuit described is also used in association with an inverter circuit (not shown) to change the speed of the motor instead of inhibiting it, when other tightening algorithms such as torque or angle are used for tightening the fastener.

Additionally the motor can be operated to turn the fastener in reverse in an untightening mode. A manually-operable selector switch (not shown) may be provided to enable either the energy tightening mode or the untightening mode to be selected.

In some applications provision may be made for selecting alternative tightening modes such as by control or by angle of turning control. A multifunction selector switch may be provided to operate the motor to effect each tightening mode and the untightening mode.

The motor and its control circuits may be incorporated in a hand-held tightening tool such as a right-angle nut runner.

## Claims

1. Method of tightening a screw-threaded fastener in a workpiece-joint using a power-driven rotary tightening tool, said tightening tool containing power-driven rotatable parts, and applies a tightening torque on the fastener until it is tightened beyond the snug-point of the joint, characterized in that the fastener is tightened beyond the snug point by the inertial energy of the rotating parts of the tightening tool after input power to the rotating parts of the tool has been inhibited.

2. Method of tightening a screw-threaded fastener in a workpiece-joint by using a power-driven rotary tightening tool, characterized by turning the tightening tool through the initial angle until the snug point of the joint is reached, at which further turning of the fastener would tighten the joint, detecting the snug point, and employing the detection of the snug point for inhibiting further application of input power to the tightening tool.

3. Method according to claim 1, characterized in that the rotational speed of the rotating parts of the tightening tool is calculated with the torqueangle relationship c′ the fastener to be tightened and with the moment of inertia of the rotating parts.

4. Method according to claim 1, characterized in that the relationship between rotational speed of the rotatable parts of the tightening tool and the final torque upon the fastener, at which it is correctly tightened, is determined by trial on a test piece on which the torque is measured by a transducer.

5. Apparatus for tightening screw-threaded fasteners to produce threaded joints, comprising a power-driven rotary tightening tool with a controllable power input, characterized by means for detecting the snug point of the joint and by means for inhibiting power input to the power driven rotary tightening tool when the snug point has been detected.

6. Apparatus according to claim 5, characterized in that the rotary tightening tool comprises rotating parts running freely after switching off the input power to said rotatable parts.

7. Apparatus according to claim 5, characterized in that the rotary tightening tool contains a variable speed driving motor.

8. Apparatus according to claim 7, characterized in that the driving motor is an induction motor controlled by an inverter circuit.

9. Apparatus according to claim 8, characterized in that the rotary tightening tool is provided with a proximity sensor (10) responsive to the passage of a rotating metallic part of the driving motor, e.g. a blade of a cooling fan of said driving motor, and that a control circuit for determining a reduction in speed of the driving motor is provided, said reduction speed being indicative of reaching the snug point, said control circuit being able to inhibit further power input to the driving motor.

10. Apparatus according to at least one of claims 5 to 9, characterized by a hand-held nut runner driven by an induction motor controlled by an inverter circuit, further by circuit means for detecting when the snug point has been reached, further by circuit means for switching off the electrical supply to the induction motor when the snug point has been detected, said circuit means including a proximity detector positioned adjacent the cooling fan blades of the induction motor to detect the reduction in speed of the induction motor indicative of the fastener reaching the snug point.

11. Apparatus according to at least one of claims 5 to 10, characterized by a manually-operated switch controlling a circuit for operating the motor in reverse direction to provide an untightening operation mode.

12. Apparatus according to at least one of claims 5 to 11, characterized in that at least one motor-control circuit is provided operable in response to torque or angle of turn input to the fastener, and that a selector switch is provided for selecting the mode of operation from energy tightening, torque control or angle of turning control and untightening.

13. Apparatus according to claim 5, characterized in that the driving motor is an electrically commutated or brushless D.C. motor or a pneumatic motor.

14. Apparatus according to claim 8, characterized in that said inverter circuit for controlling the rotational speed of the rotatable parts of the tightening tool at the snug point produces a variable output according to the angular velocity which is required in order to produce the correct inertial energy available for absorption by the fastener in order to effect the required tightening torque during run-down of the rotatable parts.

15. Apparatus according to at least one of claims 5 to 14, characterized in that a control circuit comprises a frequency to voltage converter (11) connected to the proximity sensor (10), that the output of converter (11) is connected via a delay circuit (13) to the output of a differential amplifier (14) for production of an input signal at circuit point (15), that said point (15) is connected with a comparator circuit (16) having a second and negative reference voltage input (17), the signal from said comparator being used as inhibiting signal to stop the driving motor (20).

16. Apparatus according to claim 15, characterized in that between the driving motor (20) and the comparator output (18) a latch circuit (19) is provided.

17. Apparatus according to claim 15, characterized in that an inverter circuit is associated with said control circuit in order to change the speed of the driving motor instead of inhibiting it.

0 271 902

# FIG. 1

ROTOR TIGHTNING ENERGY $= 1/2\ Jw^2$

$\Rightarrow\ 1/2\ Jw^2 = 1/2k\ (T_p - T_s)^2$ (NEGLECTING LOSSES)

i.e. $(T_p - T_s)^2 \propto W^2$

$T_p - T_s \propto W$

IN ELASTIC RANGE

ENERGY $= \int T\,d\alpha$

$= 1/2(T_p - T_s)(\alpha_p - \alpha_s)$

$= 1/2k(T_p - T_s)^2$

$T = k\alpha$

FIG. 2

**FIG. 3**

```
┌──────────┐      ┌───────────┐  12  SPEED        ┌─────────────┐
│PROXIMITY │─────▶│ FREQUENCY │      VOLTAGE       │DIFFERENTIAL │
│          │      │    TO     │      ACTUAL        │             │──▶
│ SENSOR   │      │ VOLTAGE   │────▶              │ AMPLIFIER   │
│          │      │ CONVERTER │                    │             │
└──────────┘      └───────────┘                    └─────────────┘
     10               11               ┌───────┐       14
                                        │ DELAY │
                                        └───────┘
                                           13
```

ACCELERATION           15

17—YE REFERENCE
      VOLTAGE

```
┌───────────┐  SNUG      ┌───────┐        INHIBIT
│COMPARATOR │  SIGNAL    │ LATCH │──────▶ SIGNAL
│           │────▶      │       │  20      TO
└───────────┘   18       └───────┘        MOTOR
     16                     19
```

# EISENFÜHR & SPEISER
Patentanwälte · European Patent Attorneys

Unser Zeichen: M 1375

Anmelder/Inh.: MITSUBISHI DENKI

Aktenzeichen: 87 118 532.8

Datum: February 1, 1988

Patentanwälte
Dipl.-Ing. Günther Eisenführ
Dipl.-Ing. Dieter K. Speiser
Dr.-Ing. Werner W. Rabus
Dipl.-Ing. Detlef Ninnemann
Dipl.-Ing. Jürgen Brügge

European Patent Office

8000 München 2

Pursuant to the communication of January 27, 1988

and with reference to our letter of December 16, 1987 we herewith request to amend the originally filed text and drawings in accordance with the following:

(1) Throughout the text
Change "subrate" and "multimedia" to --sub-rate-- and --multi-media--, respectively;

(2) Throughout the text
Change "moving picture" to --motion video--;

(3) Page 1, line 11
After "CCITT", add --Draft--;

(4) Page 3, line 4
Before "video", add --motion--;

(5) Page 4, line 1
Change "check" to --correction--;

(6) Page 4, line 23
Before "1200", add --the--;

(7) Page 4, line 24
Before "is", add --data--;

WWR/kl